# EUROPEAN PATENT SPECIFICATION

(11) **EP 3 838 475 B1**
(45) Date of publication and mention of the grant of the patent: **19.07.2023**
(21) Application number: 20212209.9
(22) Date of filing: 07.12.2020
(51) Int. Cl.: B23Q 1/03, B27C 9/04, B27C 5/06, B27M 1/08

(54) **IMPROVED WORK BENCH AND MACHINE INCLUDING THIS BENCH**
VERBESSERTE WERKBANK UND MASCHINE MIT DIESER BANK
BANC DE TRAVAIL AMÉLIORÉ ET MACHINE INCLUANT CE BANC

(30) Priority: 16.12.2019 IT 201900024102
(43) Date of publication of application: 23.06.2021
(73) Proprietor: SCM Group S.p.A., 47921 Rimini (RN) (IT)
(72) Inventor: BASSI, Enrico, 47921 Rimini (IT)
(74) Representative: Tiburzi, Andrea

(56) References cited:
- EP-A1- 1 166 961
- EP-A2- 1 270 147
- IT-A1- MO20 090 035

## Description

The present invention relates to an improved work bench and machine including this bench.

More specifically, the invention relates to an improved work bench for supporting and transporting workpieces, in particular, realized in a work center.

In the following, the description will be directed to a work bench used on work centers for the processing of wooden pieces, in particular panels, but it is clear that it should not be considered limited to this specific use.

As is well known in the wood panel processing field, in machining centers, these panels are subjected to various processes such as cutting, milling, drilling, etc.

The machining centers within a factory can be "stand alone", that is not connected to any other machine, or inserted in a production line, or in connection with other machines, in order to subject the panel to different processes not performed in the work center.

In stand-alone machining centers, the loading and unloading of the panels from the work bench is done manually by the operator.

On the other hand, in the work centers inserted in a line, the work bench of the work center is equipped with means for moving the panel. These moving means allow automatic loading from a machine or panel magazine upstream of the machining center itself, and automatic unloading, after machining, to a subsequent machine or magazine, downstream of the work center. These benches must be extremely flexible to guarantee the continuous processing and transport of panels of different sizes, ensuring the shortest possible downtime.

Typically, a work center consists of:
- a base which extends longitudinally in a first direction X, and transversely in a second direction Y;
- a work bench supported by the base, to support and block the panel to be machined;
- one or more crossbeams extending, along a direction parallel to Y, above the work bench and moving along the base in the X-direction;
- one or more machining groups arranged on one or more crosspieces, and movable along a third direction Z, orthogonal to the first direction X, and the second direction Y.

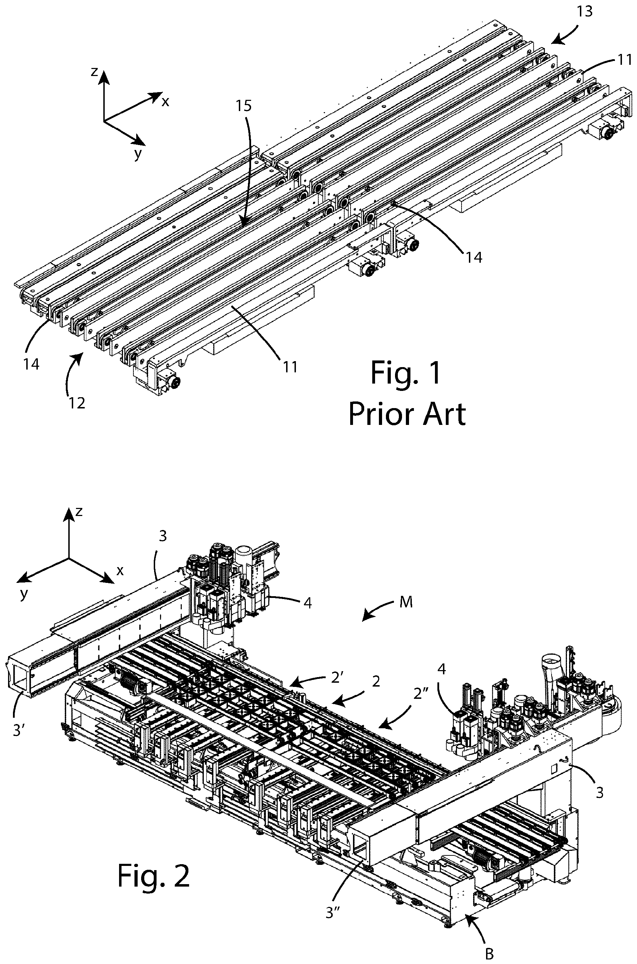

With reference to figure 1, a work bench 1 according to the known art is observed.

This plane extends along the first direction X, and comprises a plurality of support elements 11, which also extend along the first X-direction and form a support plane 15 for the panel to be machined.

Between two of said consecutive support elements 11 there is interposed a respective motorized conveyor belt 14, capable of transporting the panel from the loading area 12 to the unloading area 13 of the work bench 1 or vice versa.

Said surface 1 can be configured by moving the support elements 11 and the conveyor belts 14 along a direction parallel to Y, to create the correct support surface 15 according to the dimensions of the panel.

Said work bench 1 also comprises actuation means for moving, along the third Z-direction, said conveyor belts 14 from a rest position, in which it is lowered with respect to said support elements 11, and an operating position, in which it is raised with respect to said support elements 11, to allow alternatively the support of the panel on said support elements 11, and the transport of the panel on said conveyor belts 14.

The work bench 1 further comprises independent locking means, such as suction cups, not shown in the figure, arranged between the support elements 11 along a direction parallel to Y.

The panel, coming from another machine or from a magazine, is loaded onto worktable 1.

The work bench 1, before the entrance to the panel, is configured by moving the support elements 11 and the conveyor belts 14 along the second Y-direction, according to the dimensions of the panel. When the panel, moved by the conveyor belts 14, which are in the operating position, reaches the desired height over X, the conveyor belts 14 themselves are brought into the rest position, and the panel is engaged by the locking means and subjected to the processes foreseen by the working group.

After the processing, the panel is unloaded by means of the conveyor belts 14 and the work bench 1 must be dimensionally reconfigured for the entry of a new panel of different dimensions from the previous one. It is clear that this procedure, which cannot be carried out during machining, negatively affects machining times.

A further disadvantage of this type of work bench occurs when the panel must be worked on its narrow face parallel to the second Y-direction. In this case, the panel must necessarily be positioned adjacent to one of the two transverse ends of the work bench, to ensure that the machining group reaches said narrow face. If the panel were positioned with said narrow face in any other point of the work bench 1, the working unit would not be able to carry out the machining on said narrow face due to the presence of the support elements 11. In case of both narrow faces of the panel must be machined, head and tail, parallel to Y, it will be necessary to move the panel, by means of the conveyor belts 14, to the same position on the two transversal ends of the work bench 1. It is clear that this procedure is extremely disadvantageous and negatively affects machining times.

IT MO20 090 035 A1 forms the basis for the preamble of the independent claim 1. EP 1 166 961 A1 and EP 1 270 147 A2 discloses other examples of the prior art.

In light of the above, it is therefore an object of the present invention to propose a work bench that is flexible in terms of configurability according to the dimensions of the panel to be machined, without affecting the machining times.

Another object of the invention is to allow the machining unit to work the narrow faces of the panel, in the Y-direction, transverse to the work bench, in all positions of the panel on the work bench itself.

It is therefore specific object of the present invention a work bench having the technical features of claim 1.

Always according to the invention, said work bench may comprise at least one further supporting and blocking member arranged on the same side of one of said at least two supporting and blocking members, with respect to said at least one conveyor group.

Still according to the invention, said conveyor group may comprise at least one motorized conveyor belt arranged along said first direction.

Advantageously according to the invention, said at least one conveyor group and said at least two supporting members may be movable relatively to each other along a third direction, orthogonal to said first direction and said second direction.

Further according to the invention, said at least two supporting and blocking members may be coupled with at least one bar, wherein said bar is below said work bench and arranged along said second direction and wherein said at least one bar is movable along said first direction.

Always according to the invention, said work bench may comprise a plurality of bars, arranged parallel to each other, wherein each bar comprises two or more supporting and blocking member, and it may comprise a plurality of conveyor groups, wherein one or more of said conveyor groups is interposed between two supporting and blocking member adjacent and coupled with the same bar.

Still according to the invention, said work bench may comprise first actuator means of pneumatic and/or electric and/or oleodynamic type, for moving said conveyor group in said third direction, between a rest position, wherein said conveyor group is lowered with respect to said supporting bench, and an operating position, wherein said conveyor group is raised with respect to said supporting bench.

Advantageously according to the invention, said work bench may comprise second actuator means, preferably of electric type, for moving said at least one bar along said first direction.

Preferably according to the invention, said at least two supporting and blocking members may be connectable to a vacuum generator device, so as to create a vacuum condition between said supporting and blocking member and said workpiece, so as to block the workpiece.

Always according to the invention, said work bench may comprise abutment means, arranged along said first direction, comprising actuators for the moving along said third direction, between an operating position wherein they are raised with respect to said supporting bench, and a rest position, wherein they are lowered with respect to said supporting bench, and approaching means, also arranged along said first direction, and at an height along said third direction greater than said supporting bench, so as to contact the workpiece, said approaching means comprise actuators for moving along said second direction, so as to bring the workpiece in abutment against said abutment means.

Further according to the invention, each one of said supporting and blocking members comprises a sucking cup for blocking said panel and supporting means, other than said sucking cup, for supporting said panel.

Advantageously according to the invention, said supporting means comprise at least two supporting strips arranged near said sucking cup.

Advantageously according to the invention, said at least one sucking cup is movable along said third direction, with respect to said at least two supporting strips, from a rest position, to a working position, wherein said panel is blocked.

Preferably according to the invention, each sucking cup may be removable and/or slidably coupled, along said third direction, with said at least one bar.

It is further object of the present invention a machine having the technical features of claim 12.

The present invention will be now described, for illustrative but not limitative purposes, according to its preferred embodiments, with particular reference to the figures of the enclosed drawings, wherein:
figure 1 shows a perspective view of a work bench according to the prior art;
figure 2 shows a perspective view of a machine with the work bench according to a first embodiment which is not part of the invention;
figure 3 shows a perspective view of the first embodiment;
figure 4 shows a detail of the front view of a work bench of figure 3;
figure 5 shows a perspective view of a second embodiment of a work bench which is not part of the invention;
figure 6 shows a further perspective view of a work bench of figure 4, in a different configuration;
figure 7 shows a side view of a work bench of figure 4;
figure 8 shows a perspective view of a third embodiment of a work bench according to the invention; and
figure 9 shows a detailed perspective view of the work bench of figure 8.

In the various figures, similar parts will be indicated by the same reference numbers.

With reference to figure 2, a machine M is seen comprising a work bench 2.

The machine M essentially consists of a base B, which extends longitudinally in a first direction X and transversely in a second direction Y, orthogonal to the first direction X, a work bench, divided into a first portion 2' and a second portion 2", supported by the base B.

Said machine M also comprises a first crosspiece 3' and a second crosspiece 3", which extend, along a direction parallel to the direction Y, above said first portion 2' and said second portion 2" respectively, first called 3' and second 3" crossbar are movable along the base B in the first X-direction.

Finally, said machine M comprises a plurality of working groups 4 arranged on the first 3' and second 3" crosspiece, and movable along the second Y-direction and along a third Z-direction, orthogonal to the first X-direction and to the second Y-direction.

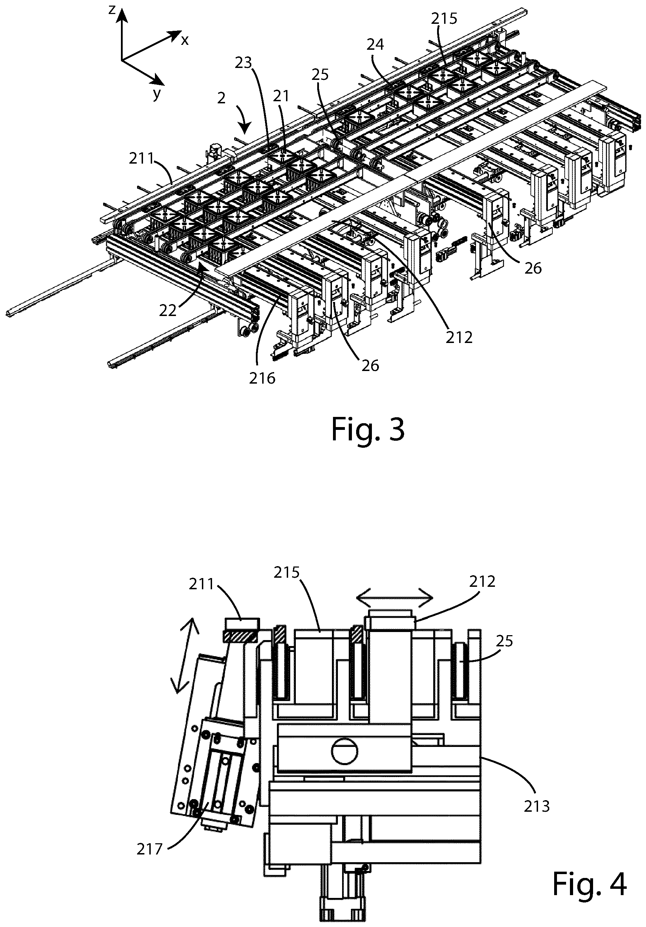

With reference to figure 3, the first embodiment of a work bench 2 for supporting, locking and moving a panel to be machined can be in particular seen.

The work bench 2 extends in length along the first X-direction, and transversely along the second Y-direction. Said work bench 2 comprises a supporting bench 23 for a panel to be machined, and a plurality of conveyor groups 22 arranged parallel to each other and oriented along the first X-direction.

The work bench 2 also comprises actuation means for moving each conveyor group 22, along the third Z-direction, from a rest position, in which it is lowered with respect to the supporting bench 23, and an operating position, in which it is raised with respect to the supporting bench 23, to allow, alternatively, the support of the panel to be worked on said supporting bench 23, and the transport of the panel on said conveyor group 22 along the first X-direction.

In the embodiment shown, each conveyor group 22 comprises a closed-loop conveyor belt 24, engaged in a pair of pulleys 25, of which at least one is motorized.

Said supporting bench 23 also comprises a plurality of supporting and blocking elements 21, to support and block the panel to be machined, arranged on respective bars 26 in turn arranged along the second Y-direction. Said bars 26 are underlying said supporting bench 23, and movable along said first X-direction.

Two or more supporting and blocking elements 21 are coupled to each bar 26 which form said supporting bench 23.

Said conveyor groups 22 are interposed, with respect to each bar 26, between two consecutive supporting and blocking elements 21 of each bar 26.

Each bar 26 is equipped with independent electric motorization, to allow its movement along said first X-direction, however, the movement of said bars 26 can also be of the manual type.

The work bench 2 also comprises abutment means 211 and approaching means 212.

The abutment means 211, in the embodiment shown, comprise a bar 211, arranged along the first X-direction, in one end of the work bench 2. The bar 211 is equipped with a pneumatic actuator 217, which makes it movable along the third Z-direction, between an operative position, above the supporting bench 23, so as to be able to contact the panel to be worked, and a rest position, in which it is arranged below the supporting bench 23, so as not to interfere with the panel to be machined.

Said abutment means 211, therefore, constitutes a spatial reference for the panel to be machined.

The approaching means 212, in the embodiment shown, also comprise a bar 212 arranged along the X-direction and at a height along the Z-direction, which is greater than the supporting bench 23, to be able to contact the panel to be machined.

Said supporting and blocking means 212 are movable on a guide 213 oriented along the Y-direction, to contact the panel to be machined and bring it to abut against the abutment means 211, the movement of the supporting and blocking means 212 is preferably automatic (i.e., with electric or pneumatic actuator means).

With reference to figure 4, a detail of the abutment means 211 and of the approaching means 212 is observed.

Returning to figure 3, it can be seen that the supporting and locking elements 21 are suction cups 215, of known type, provided with a base and a head comprising a gasket. Said suction cups 215 are connected through a duct to a vacuum generation device (not shown in the figures), to create a vacuum condition between said head and the lower surface of the panel to be machined, such as to guarantee the seal of the panel itself while machining.

The suction cups 215 are removably coupled to the bars 26. Furthermore, each suction cup 215 is movable on the respective bar 26, on a guide 216 arranged on the bar 26, along the second Y-direction.

The movement of each suction cup 215 on the respective bar 26 as said along the second Y-direction, can be manual or automatic. In the case of manual movement, it is carried out by an operator; in the case of automatic movement, each suction cup 215 is equipped with motorization.

In further embodiments, not shown in the figures, the conveyor groups 22 are also movable along the Y-direction.

The operation of the work bench 2, described above, inserted in the machine M is as follows.

While it is receiving a first and a second panel to be machined, the work bench 2 can be configured according to the dimensions of the panels themselves and the machining to be carried out on them.

The first 2' and the second 2" portion of the work bench 2 are suitably configured, moving the bars 26 along the first X-direction and/or the supporting and blocking elements 21 along the second Y-direction.

This configuration must allow the working groups 4, arranged on the first crosspiece 3', to be able to reach all the faces of the second panel on which the machining is programmed, and the working groups 4, arranged on the second crosspiece 3", to be able to reach all the faces of the first panel, on which machining is programmed.

Once the configuration of the first 2' and second 2" portion of the work bench 2 is completed, the conveyor belts 24 of the respective portions are moved into the operating position, then they are raised with respect to the supporting bench 23, and the first and second panels are moved and placed, either by an operator or by an automatic loading system, each close to the end prepared for loading, along the first X-direction, of the machine M.

Subsequently, the first panel is transported by the conveyor belts 24 in the desired position along the first X-direction of the second portion 2" of the work bench 2, and the second panel is transported by the conveyor belts 24 in the desired position along the first X-direction of the first 2' portion of the work bench 2.

At this point the conveyor belts 24 are moved to the rest position, below the supporting bench 23. Subsequently, the approaching means 212 of the respective portions 2' and 2 "of the work bench 2, contact the first and second panels, which are moved along the second Y-direction against the abutment means 212, which are in the operative position.

The first and second panels will therefore be arranged on a desired number of supporting and blocking elements 21 respectively of the second 2" and of the first portion 2' of the work bench 2, in which said supporting and blocking elements 21 are arranged in the most suitable position for the machining to be carried out, leaving suitable maneuver space for the working group 4. After activating the vacuum generation device, said supporting and blocking elements 21 block the first and second panels.

The first and second panels can therefore be subjected to the machining programmed by the working groups 4, arranged respectively on the second 3 "and on the first 3' crosspiece.

During the execution of said machining, the remaining part of the first 2' and/or second 2" portion of the work bench 2 not engaged by the panel being machined, can be configured, as described above, to receive a new panel.

Once the processing of the first panel has been completed, it is unlocked, deactivating the vacuum generation device and the conveyor belts 24 passes to the operating position, in order to move the first panel towards the unloading area of the machine M.

Similarly, the second panel is also unloaded.

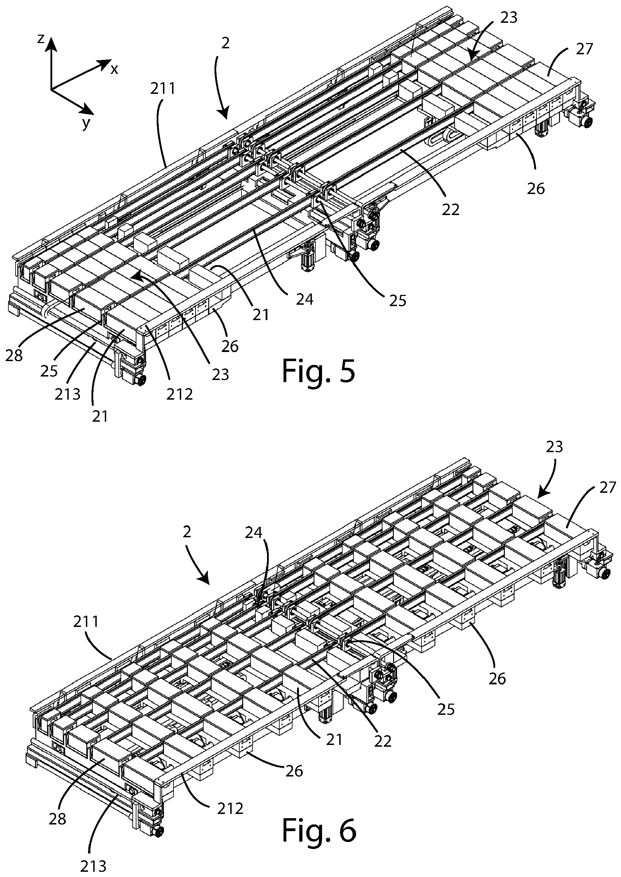

With reference to figures 5-7, on the other hand, the second embodiment of the work bench 2 is observed, which differs from the first embodiment in the type of supporting and blocking elements 21.

In the second embodiment, the supporting and blocking elements 21 are sacrificial panels 27, made of breathable material, such as, for example a medium density wood fiber panel, a material known by the acronym "mdf".

Said sacrificial panels 27 are placed on a base 28, connected by means of a duct to a vacuum generation device, capable of creating a vacuum condition between the lower surface of said sacrificial panels 27 and said base 28, and between the upper surface of said sacrificial panels 27. sacrificial panels 27 and the panel to be machined, so as to guarantee the sealing of the panel during machining.

The supporting and blocking elements 21 coupled to each bar 26 preferably have a gradually decreasing or increasing size along said third Y-direction, to ensure the correct support of panels to be machined of different sizes.

In the embodiment shown, each supporting and blocking element 21, coupled to the respective bar 26, has the same size as the corresponding supporting and blocking element 21 of the subsequent bar 26, said two supporting and blocking elements 21, are arranged aligned on the respective bars 26 along said first X-direction, forming a series of supporting and blocking elements 21. All the supporting and blocking elements 21 of each series have the same dimension.

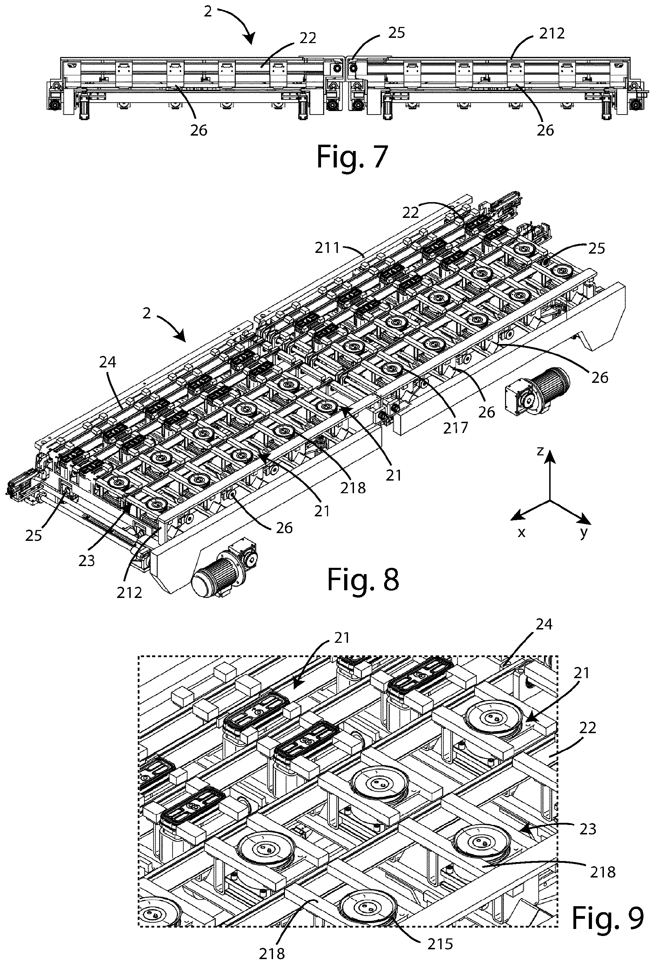

With reference to figures 8-9, on the other hand, a third embodiment of the work bench 2 according to the invention is observed, which differs from the first and second embodiments in the type of supporting and blocking elements 21.

Each supporting and blocking element 21 comprises a suction cup 215 and supporting means 218 distinct from the suction cup, which in said embodiment are at least two support strips 218.

However, in further embodiments, not shown in the figures, the support means can be made in a different way.

In this case, unlike the first embodiment, the suction cups 215 are configured only to lock the panel, the supporting bench 23 is instead made of at least two support strips 218 of each supporting and blocking element 21.

Similarly, to the first embodiment, the suction cups 215 are connected through a duct to a vacuum generation device (not shown in the figures), to create a vacuum condition between the upper surface of the suction cup 215, and the lower support surface of the panel to be processed, so as to hold the panel while machining.

The suction cups 215, in this embodiment, are movable along the third Z-direction with respect to the support strips 218, on which, as mentioned, the panel to be machined rests, so as to allow or prevent the blocking of the piece P.

The suction cups 215 and the support strips 218 are arranged on respective bars 26, which in their turn are oriented along the second Y-direction.

Said bars 26 are arranged underneath said supporting bench 23 and movable along said first X-direction, to allow the working groups 4 to work the narrow faces and/or the lower face of the panel at any point of the supporting bench 23.

In another embodiment, not shown in the figures, the supporting and locking elements are pliers.

An advantage of the present invention is that of reducing processing times, allowing the configuration of the work bench according to the dimensions of the panel and the machining to be carried out on it, in the "hidden" time, i.e., during the machining of other panels.

Another advantage of the invention is that of allowing the working group to work the narrow faces of the panel, also in the second Y-direction, transversal with respect to the first X-direction of longitudinal extension of the work bench, in all positions of the panel on the work bench itself.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Work bench (2) for a machine (M), to support, block and move a workpiece, wherein said work bench (2) extends longitudinally along a first direction (X), and transversely along a second direction (Y), orthogonal to said first direction (X), comprising
at least two supporting and blocking members (21), for supporting and blocking said workpiece, arranged for forming a workpiece supporting bench (23),
at least one conveyor group (22), for moving said workpiece along said first direction (X),
wherein said at least one conveyor group (22) is at least partially interposed between said at least two supporting and blocking members (21), at least when it does not move said workpiece, wherein said at least two supporting and blocking members (21) are movable along said first direction (X),
wherein each one of said supporting and blocking members (21) comprises a sucking cup (215) for blocking said panel and supporting means (218), other than said sucking cup (215), for supporting said panel,
wherein said supporting means comprise at least two supporting strips (218) arranged near said sucking cup (215), said work bench (2) being **characterised**
**in that** said at least one sucking cup (215) is movable along a third direction (Z), orthogonal to said first direction (X) and said second direction (Y), with respect to said at least two supporting strips (218), from a rest position, to a working position, wherein said panel is blocked.

2. Work bench (2) according to the preceding claim, **characterized in that** it comprises at least one further supporting and blocking member (21) arranged on the same side of one of said at least two supporting and blocking members (21), with respect to said at least one conveyor group (22).

3. Work bench (2) according to any one of the preceding claims, **characterized in that** said conveyor group (22) comprises at least one motorized conveyor belt (24) arranged along said first direction (X).

4. Work bench (2) according to any one of the preceding claims, **characterized in that** said at least one conveyor group (22) and said at least two supporting members (21) are movable relatively to each other along a third direction (Z), orthogonal to said first direction (X) and said second direction (Y).

5. Work bench (2) according to any one of the preceding claims, **characterized in that** said at least two supporting and blocking members (21) are coupled with at least one bar (26), wherein said bar (26) is below said work bench (23) and arranged along said second direction (Y) and wherein said at least one bar (26) is movable along said first direction (X).

6. Work bench (2) according to the preceding claim, **characterized**
**in that** it comprises a plurality of bars (26), arranged parallel to each other, wherein each bar (26) comprises two or more supporting and blocking member (21), and
**in that** it comprises a plurality of conveyor groups (22),
wherein one or more of said conveyor groups (22) is interposed between two supporting and blocking member (21) adjacent and coupled with the same bar (26).

7. Work bench (2) according to any one of the preceding claims, **characterized in that** it comprises first actuator means of pneumatic and/or electric and/or oleodynamic type, for moving said conveyor group (22) in said third direction (Z), between a rest position, wherein said conveyor group (22) is lowered with respect to said supporting bench (23), and an operating position, wherein said conveyor group (22) is raised with respect to said supporting bench (23).

8. Work bench (2) according to any claim 5 or claim 6 or claim 7, when depending on claim 5 or claim 6, **characterized in that** it comprises second actuator means, preferably of electric type, for moving said at least one bar (26) along said first direction (X).

9. Work bench (2) according to any one of the preceding claims, **characterized in that** said at least two supporting and blocking members (21), are connectable to a vacuum generator device, so as to create a vacuum condition between said supporting and blocking member (21) and said workpiece, so as to block the workpiece.

10. Work bench (2) according to any one of the preceding claims, **characterized in that** it comprises,
abutment means (211), arranged along said first direction (X), comprising actuators (217) for the moving along said third direction (Z), between an operating position wherein they are raised with respect to said supporting bench (23), and a rest position, wherein they are lowered with respect to said supporting bench (23), and
approaching means (212), also arranged along said first direction (X), and at an height along said third direction (Z) greater than said supporting bench (23), so as to contact the workpiece, said approaching means (212) comprise actuators for moving along said second direction (Y), so as to bring the workpiece in abutment against said abutment means (211).

11. Work bench (2) according to claim 5 or claim 6 or any one of claims 8-10, when depending on claim 5 or claim 6, **characterized in that** each sucking cup (215) is removable and/or slidably coupled, along said third direction (Z), with said at least one bar (26).

12. Machine (M) for working workpieces, comprising
a base (B) extending longitudinally along a first direction (X) and transversely along a second direction (Y),
at least one work bench (2) for supporting and moving a workpiece,
at least one cross member (3), extending along a parallel direction to said second direction (Y) and arranged above said base (B), and
at least one working group (4) for working said workpiece, wherein said working group (4) is slidably coupled with said cross member (3) in a parallel direction to said second direction (Y), and movable along a third direction (Z), orthogonal to said first direction (X) and said second direction (Y),
wherein said workpiece, when is arranged on said work bench (2) and said cross member (3) are relatively movable along said first direction (X),
**characterized in that** said work bench (2) is according to any one of the preceding claims.

## Patentansprüche

1. Werkbank (2) für eine Maschine (M), zum Abstützen, Blockieren und Bewegen eines Werkstücks, wobei sich die Werkbank (2) in Längsrichtung entlang einer ersten Richtung (X) und in Querrichtung entlang einer zweiten Richtung (Y) erstreckt, orthogonal zur besagten ersten Richtung (X), umfassend mindestens zwei Förder- und Sperrelemente (21), zur Unterstützung und
Blockieren des Werkstücks, angeordnet zum Bilden einer Bank (23) zur Unterstützung des Werkstücks, mindestens eine Fördergruppe (22) zum Vorwärtsbewegen des Werkstücks entlang der besagten ersten Richtung (X), wobei die besagte mindestens eine Fördergruppe (22) mindestens teilweise zwischen den besagten mindestens zwei Stütz- und Blockierelementen (21) angeordnet ist, zumindest wenn sie das besagte Werkstück nicht bewegt, wobei die besagten mindestens zwei Förder- und Sperrelemente (21) entlang der besagten ersten Richtung (X) bewegbar sind,
wobei jedes der Stütz- und Blockierelemente (21) einen Saugnapf (215) zum Blockieren der besagten Platte und Stützmittel (218) umfasst, außer dem besagten Saugnapf (215) zum Stützen der besagten Platte, wobei die besagten Stützmittel mindestens zwei Stützstreifen umfassen (218), die in der Nähe des besagten Saugnapfes (215) angeordnet sind, wobei die besagte Werkbank (2) **dadurch gekennzeichnet ist,**
**dass** der besagte mindestens ein Saugnapf (215) entlang einer dritten Richtung (Z) bewegbar ist, orthogonal zur besagten ersten Richtung (X) und zur besagten zweiten Richtung (Y) gegenüber den besagten mindestens zwei Stützleisten (218) aus einer Ruhestellung in eine Arbeitsposition, in der die besagte Platte blockiert ist.

2. Werkbank (2) nach dem vorhergehenden Anspruch, **dadurch gekennzeichnet, dass** sie mindestens ein weiteres Stütz- und Blockierelement (21) umfasst, das auf der gleichen Seite von einem der besagten mindestens zwei Stütz- und Blockierelemente (21) in Bezug auf die besagte mindestens eine Fördergruppe (22) angeordnet ist.

3. Werkbank (2) nach einem der vorhergehenden Ansprüche, **dadurch gekennzeichnet, dass** die besagte Fördergruppe (22) mindestens ein motorisiertes Förderband (24) umfasst, dass entlang der ersten Richtung (X) angeordnet ist.

4. Werkbank (2) nach einem der vorhergehenden Ansprüche, **dadurch gekennzeichnet, dass** die besagte mindestens eine Fördergruppe (22) und die besagten wenigstens zwei Stützelemente (21) relativ zueinander entlang einer dritten Richtung (Z) beweglich sind, orthogonal zur besagten ersten Richtung (X) und zur besagten zweiten Richtung (Y).

5. Werkbank (2) nach einem der vorhergehenden Ansprüche, **dadurch gekennzeichnet, dass** die besagten mindestens zwei Stütz- und Blockierelemente (21) mit mindestens einer Leiste (26) gekoppelt sind, wobei die besagte Leiste (26) unterhalb der besagten Werkbank (23) liegt und entlang der besagten zweiten Richtung (Y) angeordnet ist, und wobei die besagte mindestens eine Leiste (26) entlang der ersten Richtung (X) beweglich ist.

6. Werkbank (2) nach dem vorhergehenden Anspruch, **dadurch gekennzeichnet, dass** sie mehrere parallel zueinander angeordnete Leisten (26) umfasst, wobei jede Leiste (26) zwei oder mehr Stütz- und Sperrelemente (21) umfasst, und
dadurch, dass sie mehrere Fördergruppen (22) umfasst, wobei eine oder mehrere der besagten Fördergruppen (22) zwischen zwei Stütz- und Sperrelementen (21) angeordnet sind, benachbart und gekoppelt mit der gleichen Leiste (26) .

7. Werkbank (2) nach einem der vorhergehenden Ansprüche, **dadurch gekennzeichnet, dass** sie erste pneumatische und/oder elektrische und/oder öldynamische Betätigungsmittel umfasst, um die besagte Fördergruppe (22) in die besagte dritte Richtung (Z) zu bewegen, zwischen einer Ruheposition, wobei besagte Fördergruppe (22) in Bezug auf die besagte Stützbank (23) abgesenkt wird, und einer Betriebsposition, wobei die Fördergruppe (22) in Bezug zur besagten Stützbank (23) angehoben ist.

8. Werkbank (2) nach Anspruch 5 oder Anspruch 6 oder Anspruch 7, wenn abhängig von Anspruch 5 oder Anspruch 6, **dadurch gekennzeichnet, dass** sie zweite Betätigungsmittel umfasst, vorzugsweise elektrischer Art, zum Bewegen der mindestens eine besagte Leiste (26) entlang der besagten ersten Richtung (X).

9. Werkbank (2) nach einem der vorhergehenden Ansprüche, **dadurch gekennzeichnet, dass** die besagten mindestens zwei Stütz- und Blockier Elemente (21) mit einer Vakuumerzeugereinrichtung verbindbar sind, um so einen Vakuumzustand zwischen dem besagten Stütz- und Blockierelement (21) und besagtem Werkstück zu erzeugen, um das Werkstück zu blockieren.

10. Werkbank (2) nach einem der vorhergehenden Ansprüche, **dadurch gekennzeichnet, dass** sie Anschlagmittel (211) umfasst, angeordnet entlang der besagten ersten Richtung (X), welche Betätigungsmittel (217) für die Bewegung entlang der besagten dritten Richtung (Z) umfassen, zwischen einer Betriebsposition, in der sie in Bezug auf die besagte Stützbank (23) angehoben sind, und einer Ruheposition, in der sie in Bezug auf die besagte Stützbank (23) abgesenkt werden, und Annäherungsmittel (212) umfasst, ebenfalls entlang der ersten Richtung (X) angeordnet und auf einer Höhe entlang der besagten dritten Richtung (Z), die größer ist als die der besagten Stützbank (23), um das Werkstück zu berühren, wobei die besagte Annäherungseinrichtung (212) Betätigungselemente umfasst, um sich entlang der besagten zweiten Richtung (Y) zu bewegen und so das Werkstück zum Anschlag an das besagte Anschlagmittel (211) zu bringen.

11. Werkbank (2) gemäß Anspruch 5 oder Anspruch 6 oder einem beliebigen der Ansprüche 8-10, wenn abhängig von Anspruch 5 oder Anspruch 6, **dadurch gekennzeichnet, dass** jeder Saugnapf (215) abnehmbar und/oder entlang der besagten dritten Richtung (Z) mit der besagten mindestens eine Leiste (26) verschiebbar gekoppelt ist.

12. Maschine (M) zum Bearbeiten von Werkstücken, umfassend eine Basis (B), die sich in Längsrichtung entlang einer ersten Richtung (X) und in Querrichtung entlang einer zweiten Richtung (Y) erstreckt, mindestens eine Werkbank (2) zum Abstützen und Bewegen eines Werkstücks, mindestens einen Querträger (3), der sich entlang einer parallelen Richtung zu besagter zweiter Richtung (Y) erstreckt und über besagter Basis (B) angeordnet ist, und mindestens eine Arbeitsgruppe (4) zum Bearbeiten des besagten Werkstücks, wobei die besagte Arbeitsgruppe (4) mit dem Querträger (3) verschiebbar gekoppelt ist, in paralleler Richtung zur besagten zweiten Richtung (Y) und entlang einer dritten Richtung (Z) beweglich, orthogonal zur besagten ersten Richtung (X) und zur besagten zweiten Richtung (Y), wobei das besagte Werkstück, wenn es auf der besagten Werkbank (2) angeordnet ist, und der besagte Querträger (3) entlang der besagten ersten Richtung (X) im Verhältnis zueinander beweglich sind, **dadurch gekennzeichnet, dass** die besagte Werkbank (2) einem der vorstehenden Ansprüche entspricht.

## Revendications

1. Un banc de travail (2) pour une machine (M), pour soutenir, bloquer et bouger ladite pièce à usiner, où ledit banc de travail (2) s'étend longitudinalement le long d'une première direction (X), et transversalement le long d'une seconde direction (Y), orthogonale à ladite première direction (X), comprenant au moins deux membres de support et de blocage (21), pour soutenir et bloquer ladite pièce à usiner, disposée pour former une pièce à usiner soutenant le banc (23), au moins un groupe de convoyeur (22), pour déplacer ladite pièce à usiner le long de ladite première direction (X),
ou au moins un groupe de convoyeur (22) se trouve au moins partiellement interposé entre lesdits deux éléments de support et de blocage (21), au moins lorsqu'il ne bouge pas ladite pièce à usiner, où au moins deux éléments de support et de blocage (21) sont déplaçables le long de ladite première direction (X), où chacun des éléments de support et de blocage (21) comprennent une ventouse (215) pour bloquer ledit panneau et des moyens de support (218), autre que ladite ventouse (215), pour soutenir ledit panneau, où lesdits moyens de support comprennent au moins deux bandes de support (218) disposées près de ladite ventouse (215), ladite pièce à usinage (2) étant caractérisée dans au moins ladite ventouse (215) est déplaçable le long d'une troisième direction (Z), orthogonale à ladite première direction (X) et ladite seconde direction (Y), par rapport à au moins deux bandes de support (218), d'une position de repos à une position de travail, où ledit panneau est bloqué.

2. Le banc de travail (2) selon les revendications précédentes, **caractérisé par le fait qu'**il comprend au moins un élément de support et de blocage (21) disposé sur le même côté d'au moins deux éléments de support et de blocage (21), par rapport audit groupe de convoyeur (22).

3. Le banc de travail (2) selon l'une quelconque des revendications précédentes, **caractérisé par le fait que** le groupe de convoyeur (22) comprend au moins une bande transporteuse (24) disposée le long de ladite première direction (X).

4. Le banc de travail (2) selon l'une quelconque des revendications précédentes, **caractérisé par le fait qu'**au moins un groupe de convoyeurs (22) et au moins deux éléments de soutien (21) sont relativement déplaçables l'un par rapport à l'autre le long d'une troisième direction (Z), orthogonale à ladite première direction (X) et ladite seconde direction (Y).

5. Le banc de travail (2) selon l'une quelconque des revendications précédentes, est **caractérisé par le fait qu'**au moins deux éléments de support et de blocage (21) sont couplés à au moins une barre (26), où ladite barre (26) se trouve en dessous dudit banc de travail (23) et est disposée le long de ladite seconde direction (Y) et où au moins ladite barre (26) est déplaçable le long de ladite première direction (X).

6. Le banc de travail (2) selon la revendication précédente, est **caractérisé par le fait qu'**il comprend une pluralité de barres (26), disposées de manière parallèle l'une à l'autre, où chaque barre (26) comprend deux ou plusieurs éléments de support et de blocage (21) et dans **le fait qu'**il comprend une pluralité de groupes de convoyeurs (22), où un ou plusieurs groupes de convoyeurs (22) sont interposés entre deux membres de support et de blocage (21) adjacents et couplés à la même barre (26).

7. Le banc de travail (2) selon l'une quelconque des revendications précédentes, est **caractérisé par le fait qu'**il comprend des moyens d'actionnement d'un type pneumatique, électrique et/ou oléodynamique, pour déplacer le groupe convoyeur (22) dans ladite troisième direction (Z), entre une position de repos, où ledit groupe de convoyeur (22) est inférieur par rapport au banc de support (23), et une position de fonctionnement, où ledit groupe de convoyeur (22) est élevé par rapport audit banc de support (23).

8. Le banc de travail (2) selon l'une quelconque des revendications 5 ou 6 ou 7, lorsqu'il dépend de la revendication 5 ou 6, **caractérisé par le fait qu'**il comprend des seconds moyens d'actionnement, de préférence du type électrique pour déplacer au moins ladite barre (26) le long de ladite première direction (X) .

9. Le banc de travail (2) selon l'une quelconque des revendications précédentes, **caractérisé par le fait qu'**au moins deux membres de support et de blocage (21), sont connectés à un dispositif générateur de vide, de manière à créer une condition de vide entre ledit élément de support et de blocage (21) et ladite pièce à usiner, de manière à bloquer la pièce à usiner.

10. Le banc de travail (2) selon l'une quelconque des revendications précédentes, **caractérisées par le fait qu'**il comprend, des moyens de butée (211), disposés le long de ladite première direction (X), comprenant des actionneurs (217) pour déplacer le long de la troisième direction (Z), entre une position de fonctionnement où ils sont élevés par rapport à ladite barre de support (23), et une position de repos, où ils sont baissés par rapport à ladite barre de support (23), et des moyens d'approche (212), aussi disposés le long de ladite première direction (X), et une hauteur le long de ladite troisième direction (Z) supérieure à ladite barre de support (23), de manière à entrer en contact avec la pièce à usiner, lesdits moyens d'approche (212) comprennent les actionneurs pour bouger le long de ladite seconde direction (Y), de manière à apporter la pièce à usinage dans la butée contre les moyens de butée (211).

11. Le banc de travail (2) selon la revendication 5 ou 6 ou l'une quelconque des revendications 8-10, lorsque selon la revendication 5 ou 6 **caractérisé par le fait que** chaque ventouse (215) est amovible et/ou couplé de manière coulissante, le long de la troisième direction (Z), avec au moins une barre (26).

12. La machine (M) pour lesdites pièces à usiner, comprend une base (B) s'étendant longitudinalement le long d'une première direction (X) et transversalement le long d'une seconde direction (Y), au moins un banc de travail (2) pour soutenir et bouger une pièce à usiner, au moins un entrecroisement (3), s'étendant le long d'une direction parallèle à ladite seconde direction (Y) et disposée au-dessus de ladite base (B), et au moins un groupe de travail (4) pour travailler ladite pièce à usiner, où ledit groupe de travail (4) est couplé de manière coulissante avec ledit entrecroisement (3) dans une direction parallèle à ladite seconde direction (Y), et déplaçable le long de la troisième direction (Z), orthogonale à ladite première direction (X) et ladite seconde direction (Y), où ladite pièce à usiner, lorsqu'elle est disposée sur ledit banc de travail (2) et ledit entrecroisement (3) sont relativement mobiles le long de la première direction (X), **caractérisée en ce que** ledit banc de travail (2) est selon l'une quelconque des revendications précédentes.
